# EUROPEAN PATENT SPECIFICATION

(11) **EP 0 561 369 B1**
(45) Date of publication and mention of the grant of the patent: **03.03.1999**
(21) Application number: 93104331.9
(22) Date of filing: 17.03.1993
(51) Int. Cl.: B61D 17/08, B61D 17/04

(54) **Construction of structural body**
Aufbau eines Wagenkastens
Construction d'une caisse de voiture

(30) Priority: 18.03.1992 JP 61998/92
(43) Date of publication of application: 22.09.1993
(73) Proprietor: Kawasaki Jukogyo Kabushiki Kaisha, Kobe-shi Hyogo 650-91 (JP)
(72) Inventor: Kohira, Hiroaki, c/o Kawasaki Jukogyo K.K., Kobe-shi, Hyogo 652 (JP)
(74) Representative: Reinhard - Skuhra - Weise & Partner

(56) References cited:
- FR-A- 1 233 595
- US-A- 2 164 646
- US-A- 3 585 942

## Description

The invention relates to a construction of a body structure used in railroad cars or enclosed type overhead bridges and more particular to a construction of a body structure that is formed by using frameworks made by press working.

US 2,164,646 discloses a vehicle, having two side walls and a rear wall which are comprised respectably of a plurality of horizontally spaced vertical posts and a plurality of vertically spaced horizontal corrugated sheathing sections, which are fastened to the inside of these posts. However, each wall constituting part or plate does not make a major contribution to the strength of the body structure, so that there is a demand for enhancing rigidity and strength enabling the body structure to withstand forces from all directions.

From US 3,585,942 a railroad boxcar side construction is known, having a side wall of a single sheathed construction comprising a plurality of vertical sheets connected and disposed betwwen side posts. The sheets are provided with inwardly pressed panels of rectangular dish-shaped configuration vertically spaced to provide therebetween a plurality of longitudinally extending areas in the original plane of the sheets, and are horizontally spaced to provide therebetween a plurality of vertically extending areas also in the original plane of the sheets with the several areas intersecting whereby to provide a waffle pattern on the inner side of the side walls. However, this document does not show sections, which are joined together to form a body structure, and the plate material is provided at the rear surface of side posts and does not constitute the remaining sections.

FR-A-1.233.595 shows construction of a body structure having a specified number of structural sections and intersections, each defining one of a specific number of divisions of the structural body. However, there is no outer plate lined over the surface of the sections joined together.

In JP-A-61 220962 a contruction of a body structure is disclosed, comprising a specified number of individually sized sections and intersections, each defining one of a specific number of divisions of the body structure. However, each section is made up only of two plates, i.e. a reinforcement plate and an outer plate member, the joining surfaces of which flat, resulting in no stiffening effect being obtained.

Another conventional example is the Japanese Patent Preliminary Publication No. Showa 61-220963. In this structure, a bead is formed in the direction of shearing force in a drift portion enclosed by the side pillar and the crosspiece.

These conventional structural bodies, however, have many drawbacks. The side structure is made of many kinds of and therefore a large number of members, which in turn increases the number of processes in working the members. In addition, the machining itself is complex. At the assembly phase, positioning of components is complex and requires many jigs. Since there are many welding portions, there are greater chances of strain, degrading the dimensional precision.

Furthermore, since the structural bodies of the Japanese Patent Preliminary Publication No. Showa 61-220962 and 61-220963 employ beads in forming corrugations, the corrugations formed are relatively small and thus their reinforcement effects are necessarily small.

### SUMMARY OF THE INVENTION

This invention has been accomplished with a view to overcoming the above drawbacks and its objective is to provide a structural body which has a small number of components that are easy to work and assemble, and which is light but has a necessary strength.

To achieve the above objective, the construction of a body structural according to the present invention comprises features of claim 1 or claim 2.

### BRIEF DESCRIPTION OF THE DRAWINGS

Figure 1 is a front view of the structural body of the present invention;
Figure 2a is a cross section taken along the line D-D of Figure 1, Figure 2b a cross section taken along the line E-E of Figure 1, Figure 2c a cross section taken along the line F-F of Figure 1, Figure 2d a cross section taken along the line G-G of Figure 1, Figure 2e a cross section taken along the line H-H of Figure 1, Figure 2f a cross section taken along the line I-I of Figure 1, Figure 2g a cross section taken along the line J-J of Figure 1, and Figure 2h a cross section taken along the line K-K of Figure 1;
Figure 3 is a front view showing another embodiment of the structural body according the present invention;
Figure 4 is a cross section showing an example embodiment of a rib whose cross section is a trapezoid; and
Figure 5 is a front view showing an essential portion surrounding notches formed in the flange.

### DETAILED DESCRIPTION OF PREFERRED EMBODIMENT

Now, embodiments of this invention will be described by referring to the accompanying drawings.

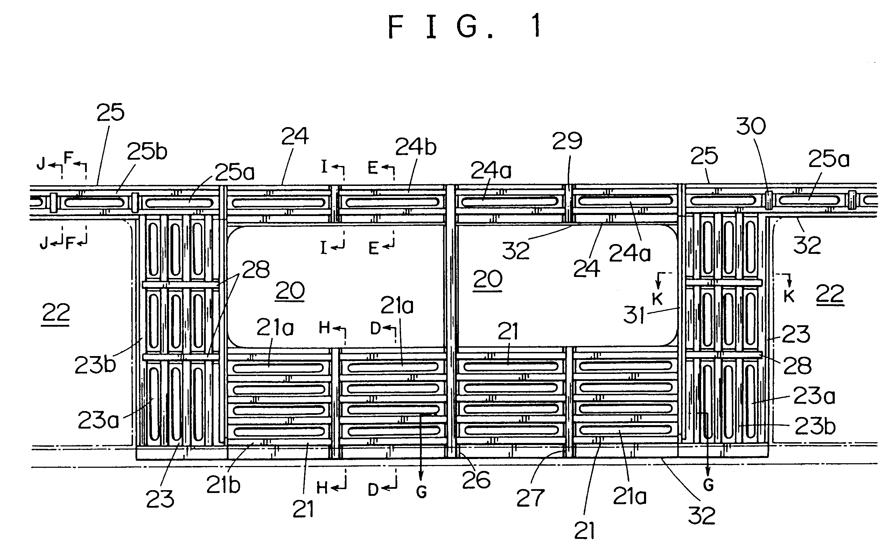

Figure 1 shows the side structure of a railway car as one embodiment of the present invention. In this invention, the side structure is divided into an appropriate number of sections. These sections are a base portion or wainscot framework ***21*** arranged below the window ***20*** and divided in two at the center; a slide door box or door pocket framework ***23*** arranged on each side of the window and having an entrance ***22*** formed on the opposite side of the window; a screen plate or window head framework ***24*** arranged above the window; and a door lintel framework ***25*** arranged above the entrance ***22***.

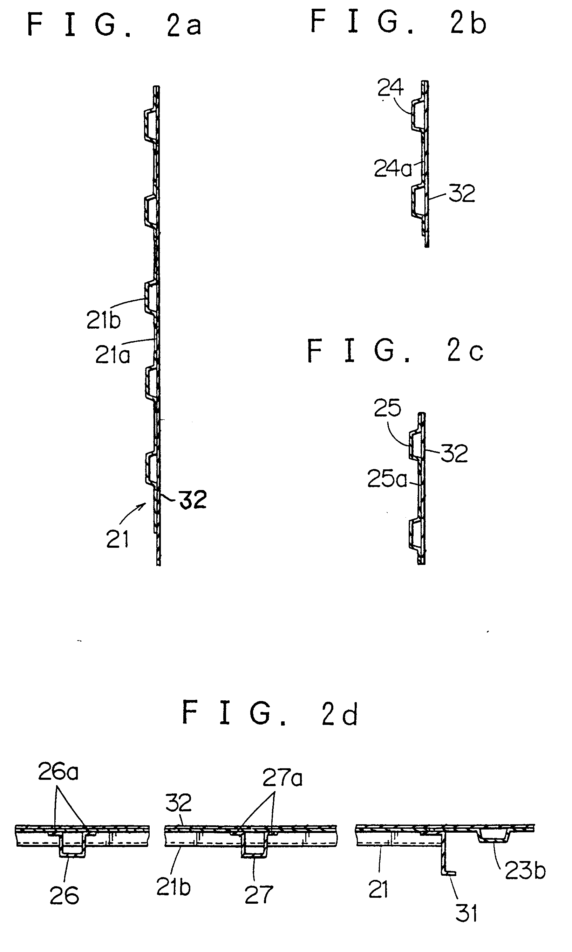

The framework ***21*** is a section that is formed by combining a rocker base ***1***, wainscot panel side post ***4***, belt rail ***5*** and reinforcement member ***11*** into one integral structure. As shown in Figure 2a, it consists of a corrugated plate of steel or stainless steel with holes ***21a*** formed to reduce weight and with ribs ***21b.***

The door pocket framework ***23*** is a section that is formed by combining side door post ***2***, end post ***3,*** slide door pocket post ***9***, reinforcement member ***11***, ***12*** and door pocket belt rail ***6*** into one integral structure and is further combined integrally with a corrugated plate made of the same metal as the wainscot framework ***21***. The door pocket framework ***23*** is formed with holes ***23a*** and ribs ***23b***.

The window head framework ***24*** is a section that is formed by combining the window header ***7*** and frieze board side post ***10*** into one integral structure. Shown in cross section in Figure 2b, it has holes ***24a*** and ribs ***24b*** as with the wainscot framework ***21***.

The door lintel framework ***25*** is a section that is formed in the similar manner to the window head framework ***24***, and has holes ***25a*** and ribs ***25b***. Figure 2c shows a cross section of the door lintel framework ***25***.

As can be seen from Figure 2a to 2c, the corrugated plates that form the above-mentioned sections are made of the same kind of material. The size of the ribs formed in each of the corrugated plates is determined such that they can provide a strength large enough to replace the door pocket post ***9***, wainscot panel side post ***4***, frieze board side post ***10***, reinforcement member ***12***, belt rail ***5***, and reinforcement member ***11***. The corrugated plate is cut into sections, and the positions of the holes to be made are determined, after which the corrugated sections are cut with holes by press working to produce the desired sections. The sections may be corrugated after being formed with holes.

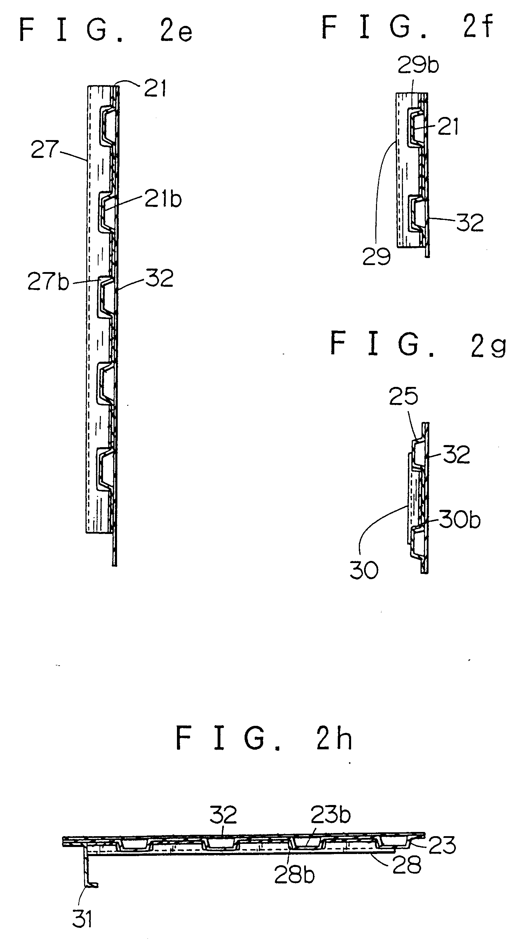

The sections ***21***, ***23***, ***24***, ***25*** thus formed separately have a small strength in a direction transverse to the corrugations and easily deform out of plane. To prevent this, an side post ***26***, a wainscot post ***27***, a door pocket reinforcement ***28***, a frieze board ***29*** and a door lintel reinforcement ***30*** are provided for improvement of strength. As shown in Figure 2d, the post ***26*** and the post ***27*** are channels U-shaped in cross section. Mounting edges ***26a*** or ***27a*** are formed extending from both ends of the U-shaped channel toward outside and are secured to the framework ***21***. The post ***27***, as shown in Figure ***2e***, is formed with a plurality of recesses ***27b*** at positions corresponding to the ribs ***21b*** that cross the post ***27*** on the wainscot framework ***21***. Because of the recesses ***27b***, the post ***27*** can be connected to the framework ***21***, as by welding, without being interfered with by the ribs ***21b***. The post ***26*** has the similar construction as the post ***27*** but spans from the upper end to the lower end of the structure body to reinforce both the base portion framework ***21*** and the window head framework ***24***. The side post ***26*** also serves as a window frame that divides the window ***20*** into left and right halves. At the window portion there is no need to form recesses ***27b*** in the post 26.

Figure 2f and 2g show the frieze board ***29*** and the door lintel reinforcement ***30***, respectively. These are basically the same in construction as the wainscot post ***27***. The door pocket reinforcement ***28*** also has basically the same construction as the post ***27*** though it is horizontally oriented.

Figure 2h show the door pocket reinforcement ***28*** secured to the door pocket framework ***23***. The ribs ***23b*** of the framework ***23*** fit into recesses ***28b*** formed in the door pocket reinforcement ***28***. The left end of the reinforcement ***28*** is engaged with and positioned by the door end post ***31***. The post ***31***, as with the side post ***26***, extends from the upper end to the lower end of the body structure. Where it overlaps the door lintel framework ***25***, the door end post ***31*** is formed with recesses as with other post members. But for the most part the door end post ***31***, unlike the side post, is arranged and fixed parallel to the ribs ***23b*** of the door pocket framework ***23***. The door end post ***31***, as shown in Figure 2h, has a Z-shaped cross section and clearly defines the boundary of the framework ***23*** and also serves as a window frame and a stopper for the door not shown.

The sections ***21***, ***23***, ***24***, ***25*** have their boundaries connected as by welding, and then are lined with outside plates ***32*** as shown in figure 1 and 2 to be formed into a side structure as a single body structure. The plate ***32*** may be formed of a single metal plate or of divided plates combined together.

In this way, left and right side structures as well as the skirt, floor and roof are formed and they are assembled to form a car structure.

In the above construction, all the sections ***21***, ***23***, ***24***, ***25*** of the structure can be formed of the same kind of corrugated plate, providing a high level of versatility or flexibility in dealing with size differences arising from different shapes of the sections. Since, even when the longitudinal dimensions of the sections vary according to the types of the cars, the widthwise dimensions do not change, the reinforcement post members ***26***-***31*** can use the same standard, improving the flexibility in manufacture. Since the sections are provided with ribs and pillar members in the vertical and horizontal directions, they are not easily deformed out of plane.

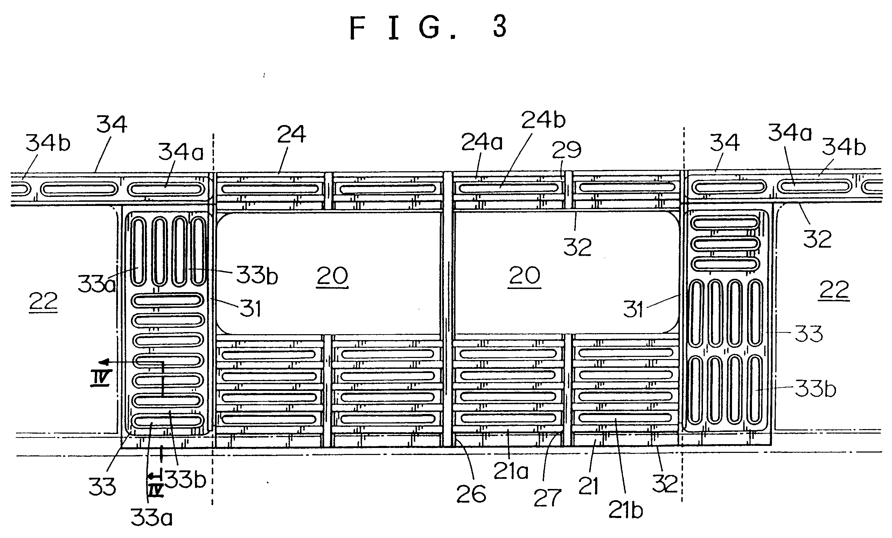

Figure 3 shows another embodiment of this invention. This embodiment has many components identical with those shown in Figure 1 and 2, so that only the difference will be explained. The door pocket framework ***33*** and the door lintel framework ***34*** are not formed of a corrugated plate as are other sections. As is seen from Figure 3, they are made of a single flat metal plate which is cut with a plurality of vertical and horizontal elongate holes ***33a***, ***34a*** and, around them, is formed with ribs ***33b***, ***34b*** as by press working. Although the door lintel framework ***34*** has only horizontal ribs, the door end post ***31***, which is arranged in the same manner as in the first embodiment of Figure 1, works as a vertical rib.

After the sections are combined, the outside plate ***32*** is lined over the surface of the structure, as in the case of the first embodiment of Figure 1.

In this construction, the door pocket framework ***33*** and the door lintel framework ***34*** cannot be formed of only the same kind of corrugated plate as other sections. When a railway car's structural body is to be made, what is required to be changed according to the type of the car is often the length of the wainscot framework ***21*** and the window head framework ***24***. The shape of the door lintel framework located above the entrance of the door pocket framework is often of the same kind regardless of the type of the car. Therefore, a material with versatility, i.e. a corrugated plate, is used for that part of the structure which may be required to change according to the type of the car. For the slide door box framework and lintel framework, both of whose dimensions do not change according to the type of the car, a special material may be used without practically losing the versatility.

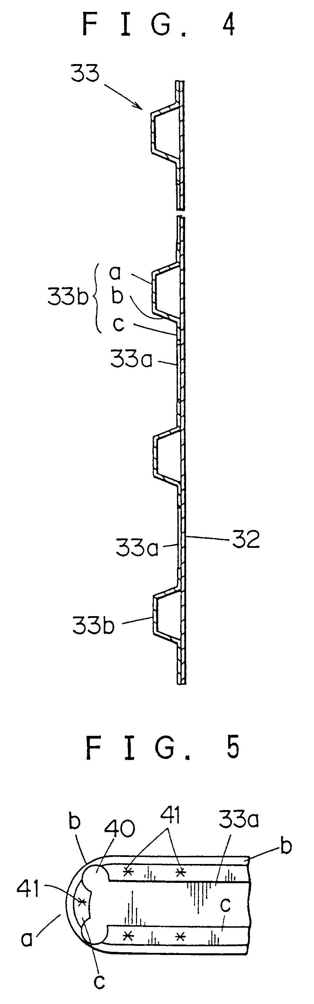

Figure 4 shows an embodiment of ribs whose cross section is trapezoidal. Rib ***33b*** consists of a reinforcement portion ***a*** located at the top parallel to the outside plate ***32***, webs ***b*** bent from each end of the reinforcement portion ***a*** toward the plate ***32***, and flanges ***c*** formed extending from the ends of the webs ***b*** to around the holes ***33a*** cut in a staggered arrangement.

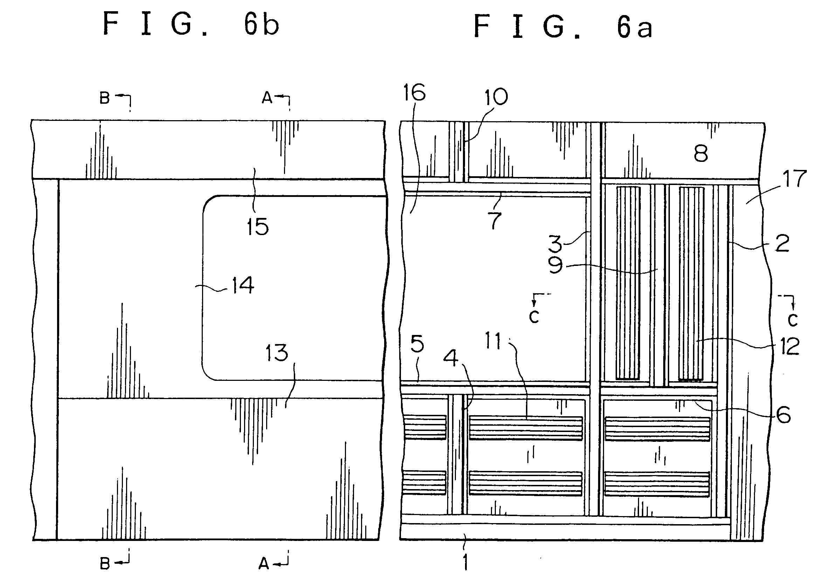

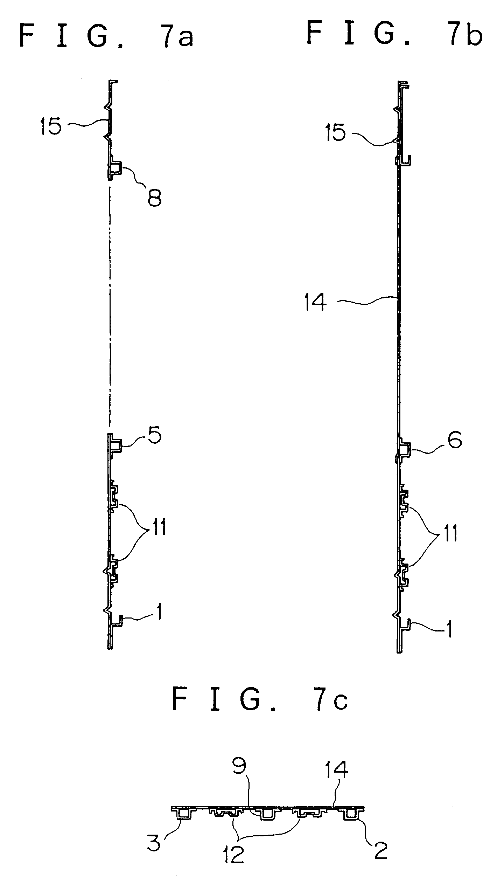

Figure 5 shows the details of the holes ***33a*** and the ribs ***33b*** formed in the door pocket framework ***33***. Their construction is commonly used in other sections of the side structural body of the railway car. The ribs ***33b***, ***34b*** shown in Figure 3 are formed by drawing process by the pressing machine. However, forming the flange c of uniform width around the holes ***33a*** (or ***34a***) is often difficult depending on the malleability of the material because cracks and wrinkles easily develop there. To avoid this problem, notches ***40*** are formed at appropriate locations in the flange ***c***. This permits the flange to be drawn easily. In the example shown, the notches ***40*** are formed at the arc portion of the flange because this portion is most likely to develop cracks and wrinkles. Therefore, if necessary the notches may be formed at linear part of the flange. Reference numeral ***41*** represents spot-welded portions between the flange and the outer plate.

The cross-sectional shape of the ribs shown in Figure 1 and 3 is not limited to rectangle or trapezoid shown above but may take other forms such as sine curves as long as the desired strength can be secured.

As mentioned above, according to the first aspect of this invention (claim 1), all the sections of the side structural body can not only be formed of the same kind of corrugated plate material but also cope flexibly with the differing sizes according to different types of structural bodies. This flexibility permits the structural body of this invention to be applied not only to mass production but also to small-scale production. Further, since uniform strength can be obtained over the entire structure, local deformation out of plane in the structural body can be prevented.

According to the second aspect of this invention (claim 2), since a part of each section of the structural body is formed with holes cut in the plate material to reduce the weight and with ribs drawn by press working around the holes, a freedom of the design increases in terms of strength and dimensions.

## Claims

1. A construction of a body structure comprising
a specified number of individually sized sections and intersections (21, 23, 24, 25), each defining one of a specific number of divisions of the body structure,
wherein each section or intersection (21, 23, 24, 25) being formed integrally of
a corrugated plate material with corrugations or ribs (21b, 23b, 24b, 25b) and weight reducing holes (21a, 23a, 24a, 25a),
at least one reinforcement member (26-30) in a direction transverse to the corrugations or ribs (21b, 23b, 24b, 25b), each reinforcement member having recesses (27b-30b) to avoid interference with the ribs (21b, 23b, 24b, 25b), and of
an outer plate member (32) lined over the outer surface of said section or intersection (21, 23, 24, 25).

2. A construction of a body structure comprising a specified number of two groups of individually sized sections (21, 24, 33, 34),
wherein each section (21, 24) of the first group is formed integrally of a corrugated plate material and an outer plate member (32) lined over the surface of said section, said corrugated plate material having a plurality of corrugations or ribs (21b, 24b) and a plurality of weight reducing holes (21a, 24a); and
wherein each section (33, 34) of a second group is formed integrally of:
a plate material having weight reducing holes (33a, 34a) and corrugations or ribs (33b, 34b) formed around the holes (21a, 24a) of at least one reinforcement member (26, 31) in a direction transverse to the corrugations or ribs (33b, 34b), each of said reinforcement members (26-30) having recesses (26b-30b) to avoid interference with the ribs (33b, 34b); and
of an outer plate member (32) lined over the surface of said section (33, 34).

## Patentansprüche

1. Konstruktion eines Wagenkastenaufbaus mit einer spezifizierten Zahl individuell dimensionierter Abschnitte und Zwischenabschnitte (21, 23, 24, 25), von denen jeder einen von einer speziellen Zahl von Abteilungen des Wagenkastenaufbaus bildet,
wobei jeder Abschnitt oder Zwischenabschnitt (21, 23, 24, 25) einstückig gebildet ist aus
einem gewellten Plattenmaterial mit Rillen oder Rippen (21b, 23b, 24b, 25b) und gewichtsverringernden Löchern (21a, 23a, 24a, 25a),
wenigstens einem Aussteifungsteil (26-30) in einer Richtung quer zu den Rillen bzw. Rippen (21b, 23b, 24b, 25b), wobei jedes Aussteifungsteil Ausnehmungen (27b-30b) zur Vermeidung eines Eingriffs mit den Rippen (21b, 23b, 24b, 25b) aufweist, und aus
einem Außenplattenteil (32), das über die Außenfläche des Abschnitts bzw. Zwischenabschnitts (21, 23, 24, 25) als Verblendung angebracht ist.

2. Konstruktion eines Wagenkastenaufbaus mit einer spezifizierten Zahl von zwei Gruppen individuell dimensionierter Abschnitte (21, 24, 33, 34),
wobei jeder Abschnitt (21, 24) der ersten Gruppe einstückig mit einem gewählten Plattenmaterial und einem Außenplattenteil (32) gebildet ist, das als Verblendung über der Fläche des Abschnitts angeordnet ist, wobei das geweilte Plattenmaterial zahlreiche Rillen oder Rippen (21b, 24b) und zahlreichen gewichtsverringernde Löcher (21a, 24a) aufweist; und
wobei jeder Abschnitt (33, 34) einer zweiten Gruppe einstückig gebildet ist mit:
einem Plattenmaterial mit gewichtsverringernden Löchern (33a, 34a) und Rillen bzw. Rippen (33b, 34b), die um die Löcher (21a, 24a) wenigstens eines Aussteifungsteils (26, 31) in einer Richtung quer zu den Rillen bzw. Rippen (33b, 34b) gebildet sind, wobei jedes der Aussteifungsteile (26-30) Ausnehmungen (26b-30b) zur Vermeidung eines Eingriffs mit den Rippen (33b, 34b) aufweist; und mit
einem äußeren Plattenteil (32), das über der Oberfläche des Abschnitts (33, 34) als Verblendung angeordnet ist.

## Revendications

1. Construction de structure de caisse comportant un nombre spécifié de sections et intersections de tailles spécifiques (21, 23, 24, 25), définissant individuellement une parmi un nombre spécifique de divisions de la structure de caisse,
dans laquelle chaque section ou intersection (21, 23, 24, 25) est formée d'un seul tenant de :
un matériau en forme de plaque ondulée munie d'ondulations ou de nervures (21b, 23b, 24b, 25b) et de trous permettant une diminution de poids (21a, 23a, 24a, 25a),
au moins un élément de renforcement (26 à 30) orienté transversalement par rapport aux ondulations ou aux nervures (21b, 23b, 24b, 25b), chaque élément de renforcement étant muni d'évidements (27b à 30b) destinés à éviter qu'il interfère avec les nervures (21b, 23b, 24b, 25b) et
un élément de plaque extérieure (32) en revêtement sur la surface extérieure de ladite section ou intersection (21, 23, 24, 25).

2. Construction de structure de caisse comportant un nombre spécifié de deux groupes de sections de tailles spécifiques (21, 24, 33, 34),
dans laquelle chaque section (21, 24) du premier groupe est formée d'un seul tenant avec un matériau en forme de plaque ondulée et un élément de plaque extérieure (32) en revêtement sur la surface de ladite section, ledit matériau en forme de plaque ondulée étant muni d'une pluralité d'ondulations ou de nervures (21b, 24b) et d'une pluralité de trous permettant une diminution de poids (21a, 24a) ; et
dans laquelle chaque section (33, 34) d'un deuxième groupe est formée d'un seul tenant de :
un matériau en forme de plaque muni de trous permettant une diminution de poids (33a, 34a) et d'ondulations ou de nervures (33b, 34b) formées autour des trous (21a, 24a) d'au moins un élément de renforcement (26, 31) orienté transversalement par rapport aux ondulations ou aux nervures (33b, 34b), chacun des dits éléments de renforcement (26 à 30) étant muni d'évidements (26b à 30b) afin d'éviter qu'il interfère avec les nervures (33b 34b) ; et
un élément de plaque extérieure (32) en revêtement sur la surface de ladite section (33, 34).
